# FASCICULE DE BREVET EUROPEEN

(11) **EP 1 467 540 B1**
(45) Date de publication et mention de la délivrance du brevet: **10.05.2006**
(21) Numéro de dépôt: 04101342.6
(22) Date de dépôt: 01.04.2004
(51) Int. Cl.: H04M 1/02, B29C 45/16

(54) **Coque d'objet et procédé de réalisation**
Gehäuse und Herstellungsverfahren
Housing and method of fabrication

(30) Priorité: 09.04.2003 FR 0350093
(43) Date de publication de la demande: 13.10.2004
(73) Titulaire: SAGEM Communication, 75015 Paris (FR)
(72) Inventeur: Rotsaert, Christophe, 95240, Cormeilles en Parisis (FR)
(74) Mandataire: Camus, Olivier Jean-Claude

(56) Documents cités:
- EP-A- 0 764 474
- EP-A- 1 138 400
- WO-A-02/49823
- DE-A- 19 517 338

## Description

La présente invention a pour objet une coque d'un objet, notamment d'un objet mobile, et son procédé de réalisation. Elle concerne en particulier des objets mobiles tels que des téléphones mobiles, des équipements domestiques, par exemple des boîtiers de télécommande, ou bureautiques, par exemple des assistants personnels électroniques (PDA). Elle peut aussi concerner les objets fixes. Elle a également pour objet un procédé de réalisation d'un boîtier de ces objets. Elle trouve plus particulièrement son intérêt dans la finition haut de gamme de ces objets, tout en obtenant un tel résultat par des moyens simplifiés de réalisation.

Dans l'état de la technique, on connaît de l'enseignement du document JP-A-2000347894, un revêtement prévu pour être déposé sur un corps d'un téléphone mobile. Selon ce document, le corps du téléphone mobile est obtenu à partir d'une résine synthétique moulée avec la forme du téléphone. Selon ce document, pour obtenir un revêtement haut de gamme, il est prévu juste après le moulage du corps, une fois que le corps est durci, une étape au cours de laquelle le corps nu est recouvert d'une couche de peinture. En effet, le corps nu présente un aspect extérieur mat qui n'est pas considéré comme acceptable. Cette couche de peinture permet de donner une couleur choisie au corps, et aussi de lui donner un état de surface plus lisse, bien plus séduisant que l'aspect à gros grain résultant du moulage.

Il est aussi enseigné dans ce document de déposer sur la couche de peinture un vernis comportant des particules de métal brillant telles que des particules de nickel ou d'aluminium. L'application du vernis forme alors une couche translucide brillante qui permet de répondre aux critères haut de gamme.

Une peinture est une substance qui forme, par application, un film opaque. Ce film opaque est coloré et comporte à cet effet un ou plusieurs pigments auxquels on peut adjoindre des matières de charge, un diluant et un ou plusieurs agents siccatifs. Une peinture est toujours associée à une désignation chimique d'un liant utilisé. Par exemple, une peinture cellulosique utilise un liant à base de cellulose. De même il existe entre autres des peintures glycérophtaliques, acryliques, ou polyuréthannes.

Un vernis, par opposition à une peinture, est une substance qui forme après application un film translucide. Il est composé de liants, de solvants et, éventuellement, de diluants et d'adjuvants. Il est susceptible de donner, par application d'au moins une couche mince sur un corps, au moins un feuil adhérent et dur, lisse et brillant, ayant en outre des propriétés protectrices ou techniques particulières. Il peut par exemple présenter des propriétés décoratives: elles sont alors obtenues par incorporation, selon le cas, de colorants, d'adjuvants et/ou d'agents de matière appropriés. Par ses propriétés protectrices, il préserve le corps des rayures, de l'action de l'air, de l'humidité ou lui donne plus d'éclat.

Plusieurs sortes de vernis sont utilisées dans l'état de la technique, dont par exemple : le vernis à base d'essence, le vernis à la gomme laque, le vernis à l'huile, le vernis à teneur moyenne en huile, le vernis aminoplaste, le vernis bitumineux, le vernis butyrique, le vernis cellulosique, le vernis copal, le vernis craquelé, le vernis en solution alcoolique, le vernis d'imprégnation, le vernis faible en huile, le vernis fort en huile, le vernis d'obturation, le vernis dispersion, le vernis mat, le vernis nitrocellulosique, le vernis polyester, le vernis polyuréthanne, le vernis émulsion, le vernis pour extérieur, le vernis teinté, le vernis urée-formol et le vernis vinylique.

De l'enseignement du document EP-A-0 269 340, on connaît par ailleurs un procédé général de revêtement d'une surface d'un corps présentant des zones de plusieurs couleurs sur lesquelles une couche de vernis est appliquée pour faire ressortir des reliefs d'une surface très granulée du corps à recouvrir. Mais selon ce document, pour obtenir un résultat correct, la surface de ce corps est préalablement recouverte d'une ou plusieurs couches de peinture de couleur pour former un motif de différentes zones de couleur sur la surface. Dans le document US-A-4 781 778, il est enseigné de vernir une coque en bois d'un téléphone mobile.

Pour réaliser des zones de couleurs différentes sur une surface, il est donc nécessaire de déposer des couches de peinture de couleurs différentes. Ce dépôt doit se faire sans superposition des couleurs et doit avoir une précision d'aboutage suffisante vis à vis du motif recherché. A cet effet, on utilise couramment des caches pour masquer une zone du corps lorsqu'une autre zone de ce corps est enduite d'une couche de peinture. Pour tenir compte des tolérances d'application, il est connu dans l'état de la technique de prévoir des gorges, sur la surface du corps à peindre, pour y accueillir les recouvrements des différentes couches, d'une manière moins visible, et ainsi faciliter la réalisation. Du point de vue de la réalisation, la nécessité de réaliser toutes ces gorges est une contrainte qui peut ne pas être justifiée par la forme finale attendue de l'objet.

D'un point de vue esthétique, les reflets renvoyés par la surface, même ensuite vernie, à l'endroit des gorges ne sont pas continus, ce qui n'est pas accepté. En effet, malgré ces précautions, le raccord entre les différentes zones de couleur n'est pas parfait. La brillance conférée par le vernis peut ne pas être homogène selon les zones, étant donné qu'il interagit avec des peintures de composition différente.

En outre, la présence de ces gorges sur le corps crée des zones de cassure préférentielle, et ces gorges rendent le boîtier plus fragile vis à vis de contraintes mécaniques auxquels il devrait résister.

D'autres solutions pour réaliser des boîtiers multicolores sont connues. Par exemple, une autre solution comporte la fabrication préalable d'étiquettes plastiques, sous la forme de feuilles. Ces étiquettes obtenues par des procédés précis d'imprimerie présentent au départ tous les motifs colorés désirés. Ces étiquettes sont ensuite placées au fond de moules par thermoformage. Puis une matière plastique est injectée dans le moule contre l'étiquette. Cette technique est difficile à maîtriser car il faut maintenir l'étiquette pendant le thermoformage, pendant sa déformation. La position des motifs est délicate à garantir par rapport à la forme du boîtier. Cette technique n'accepte que des motifs colorés simplistes, dans lesquels la position d'un changement de couleur n'est pas critique, et ne nécessite pas d'être réglée avec une grande précision. Une telle contrainte peut par contre être imposée pour un objet à touches (une télécommande, un téléphone mobile) pour lequel le motif coloré peut devoir être en correspondance des positions des touches.

Une autre technique connue est celle de la bi-injection. Cette autre technique est par exemple décrite dans les documents US-A-4 726 758 et US-A-6 070 983. Dans le document US-A-6 070 983, deux matériaux plastiques de couleurs différentes sont par exemple injectés, simultanément ou successivement dans un moule. Le choix de matériaux plastiques de couleurs différentes peut régler la question des motifs colorés. Toutefois, le choix des couleurs des matériaux plastiques est limité. Les couleurs disponibles ne conviennent pas. Le changement de couleur impose de retomber dans les problèmes de peinture précédents. Dans le document EP-A-0 835 813, il est même enseigné, dans le cadre de la bi-injection, de placer la limite entre les deux matériaux bi-injectés à l'endroit d'une rainure pour masquer des variations de largeur d'une bande colorée.

On connaît par ailleurs par les documents WO 02/49823 et DE-A-195 17 338 des solutions de métallisation d'une partie d'une surface apparente d'un téléphone mobile. Mais le choix de couleur est encore une fois limité.

L'intérêt de l'invention est qu'elle permet de résoudre les problèmes énoncés ci-dessus en proposant une solution permettant d'obtenir des boîtiers de finition haut de gamme tout en proposant un large choix de couleurs. Dans l'invention, une paroi de l'objet est réalisée par injection dans un moule d'au moins deux matériaux plastiques différents, par exemple, mais pas nécessairement, de couleurs différentes. Les matériaux sont différents par au moins une de leur caractéristique : nature du matériau et ou charge colorée. Par exemple, un matériau est en ABS et l'autre en polycarbonate. Ou bien un est d'une certaine couleur et un autre d'une autre. Puis on dépose une couche d'un même vernis translucide coloré sur toute la surface brute du boîtier en matériau bi-injecté. Ce vernis confère alors aux zones de cette surface des propriétés colorimétriques, notamment des couleurs, différentes, fonction des matériaux plastiques utilisés. Ces couleurs sont différentes de celles de départ. Le vernis confère aussi un rendu brillant signe de haut de gamme.

La couleur du corps fini est définie à la fois par la couleur du matériau injecté brut à l'endroit de la zone, par l'épaisseur de la couche de vernis translucide déposée, et enfin par la composition en colorants de cette couche de vernis. La séparation rigoureuse des motifs colorés est obtenue simplement à l'endroit du changement de matériau dans la paroi, ce qu'on sait par ailleurs facilement maîtriser par la bi-injection.

Les différences de couleurs du corps fini peuvent donc être obtenues en réalisant le corps par bi-injection, c'est à dire en injectant au moins deux matériaux de couleurs différentes pour obtenir un corps présentant des surfaces jointives et de couleurs distinctes. Ensuite, une couche de vernis recouvre indistinctement ces deux surfaces. Dans ces conditions, le raccord entre les deux zones est parfaitement obtenu, sans gorges, ni caches. Le même résultat avec les mêmes avantages pourrait également être obtenu en associant deux pièces déjà moulées de couleurs différentes, et revêtues de la couche de vernis une fois assemblées.

L'invention a donc pour objet une coque d'objet comportant une paroi monobloc obtenue par une bi-injection d'un premier et d'un deuxième matériau plastique dans un moule, dans cette paroi une première zone apparente est formée par le premier matériau plastique et une deuxième zone apparente est formée par le deuxième matériau plastique, caractérisée en ce que la paroi est recouverte à l'endroit de ces deux zones d'une couche continue d'un même vernis translucide colorée, le vernis coloré comportant des pigments donnant aux deux zones de la paroi des propriétés colorimétriques finales différentes l'une de l'autre et différentes de propriétés colorimétriques brutes des matériaux plastiques moulés.

Elle a également pour objet un procédé de fabrication d'une coque d'un objet comportant les étapes suivantes
- on injecte d'un premier et d'un deuxième matériau plastique dans un moule pour former une paroi monobloc de cette coque,
- dans cette paroi une première zone apparente est formée par le premier matériau plastique et une deuxième zone apparente est formée par le deuxième matériau plastique,
caractérisé en ce qu'il comporte les étapes suivantes
- la paroi est recouverte à l'endroit de ces deux zones d'une couche continue d'un même vernis translucide coloré, le vernis coloré comportant des pigments donnant aux deux zones de la paroi des propriétés colorimétriques finales différentes l'une de l'autre et différentes de propriétés colorimétriques brutes des matériaux plastiques moulés.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue de dessus d'une coque selon l'invention;
- Figure 2 : une vue en coupe longitudinale, selon le plan de coupe AA présenté Figure 1, de la coque selon l'invention.

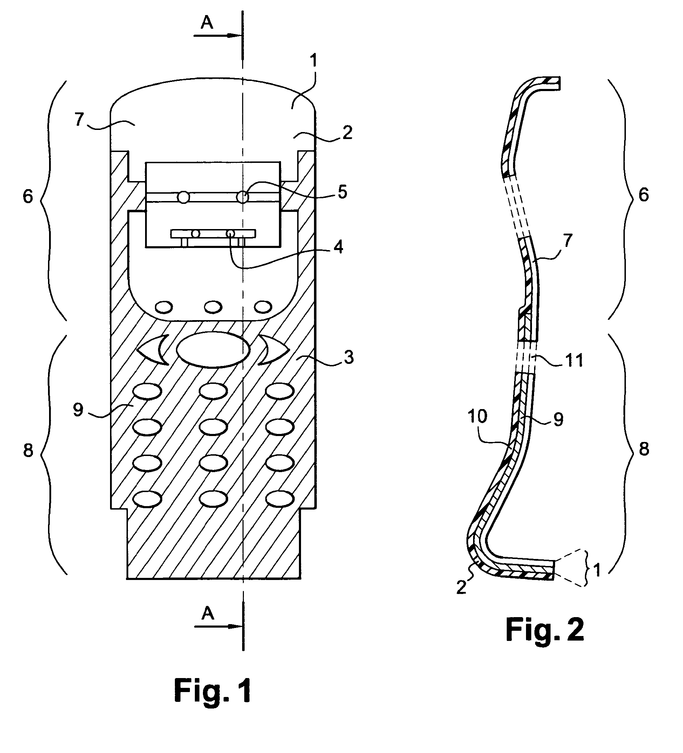

La figure 1 présente une coque selon l'invention comportant un corps 1 avec une paroi. Ce corps 1 est obtenu par moulage de matériaux plastiques pour lui donner sa forme. Ensuite ce corps 1 est recouvert d'une couche de vernis 2 appliquée sur toute la surface, sans masque ni autre procédé de contour. Le vernis 2 est translucide et coloré. Il est appliqué directement sur une surface extérieure 3 de la paroi du corps moulé 1. Cette surface extérieure 3 présente les zones apparentes 6 et 8 des matériaux plastiques bruts durcis, après que le corps 1 soit sorti du dernier moule.

Pour obtenir le corps 1, on injecte dans un exemple des matériaux plastiques liquides dans un moule à partir d'au moins deux points d'injection 4 et 5. Les deux injections peuvent être simultanées, quasi-simultanées ou successives. Les matériaux injectés sont différents dans un point d'injection 4 de ce qu'ils sont dans l'autre 5. En variante, un premier moule est injecté avec un premier matériau. Il définit la forme exacte d'une première zone apparente 6. Puis la partie de coque ainsi obtenue est placée dans un deuxième moule qui par surmoulage permet d'injecter un deuxième matériau plastique devant apparaître dans une deuxième zone 8.

Dans l'invention, le deuxième matériau plastique est distinct du premier matériau plastique. Cette différence est soit une différence de nature, matériau ABS, polycarbonate, PVC ou autre. Ou bien cette différence est une différence de charge pigmentaire : un des matériaux est coloré dans la masse d'une manière différente, avant injection. Ou bien à la fois la nature et la couleur des deux matériaux sont différentes. Bien entendu, il est possible de recourir à plus de deux matériaux, et ou à plus de deux moulages ou surmoulages, en diversifiant ainsi d'autant le produit fini.

Par exemple, les deux matériaux n'ont pas la même couleur. Ils comportent chacun des pigments, mais ceux ci une fois refroidis et durcis, donnent un aspect extérieur différent au niveau de la surface extérieure 3. Ainsi, dans le cas où le corps 1 comporte deux matériaux distincts, sur la surface extérieure 3, le corps 1 peut présenter une première zone 6, Figure 2, laissant apparaître une surface extérieure 7 noire. Le corps 1 présente aussi une deuxième zone 8 laissant apparaître une surface extérieure 9, blanchâtre. Le deuxième matériau étant surmoulé sur le premier matériau, les jonctions entre les deux zones 6 et 8 sont parfaitement délimitées par les moules. On sait, en cas d'injection simultanée ou quasi-simultanée obtenir de pareils résultats.

Dans une autre variante, le corps 1 est obtenu par moulage de plusieurs couches de matériaux distincts, les unes sur les autres. Le corps 1 laisse alors apparaître au niveau de sa surface extérieure 3 autant de zones qu'il y a de matériaux utilisés.

A ce stade, lorsque le corps 1 a été moulé, il présente une surface extérieure brute. Ensuite, dans l'invention on dépose une couche de vernis 10 sur cette surface extérieure brute. Le vernis 10 est donc appliqué indistinctement sur toutes les zones 6 et 8 du corps 1. Le vernis 10 est translucide, c'est à dire qu'il laisse apparaître des teintes de la couleur de la surface sur laquelle il est appliqué. Quelle que soit la couleur brute de la surface, après application du vernis, celui ci confère un aspect différent à cette surface. En effet, le vernis confère de la couleur et de la brillance à la teinte de la surface.

Le vernis étant coloré comporte des pigments. Dans ce cas, ces pigments modifient selon les lois des mélanges des couleurs, la teinte de chacune des zones 6 ou 8.

Dans un exemple, la zone 6 formée par la couche 7 noire en un premier matériau se colore en violet parce que la couche de fond à cet endroit est sombre. Parce que le vernis transparent comporte des pigments blancs ou opales, la zone 6 est ainsi dans un même état que si elle avait été peinte par une couche de peinture violette opaque.

L'autre zone 8 formée par la couche 9 blanchâtre prend alors, avec le même vernis, une apparence nacrée. Les couleurs finales sont donc différentes l'une de l'autre, violet et nacré, et différentes des couleurs brutes, noire et blanchâtre, des matériaux plastiques moulés.

Toujours avec ce même verni, dans le cas où il est déposé sur une zone 8 rouge, le rendu est rose nacré à l'endroit de la zone 8.

De ce fait, ce sont les propriétés colorimétriques des matériaux avant et après application du vernis qui sont modifiées. Les propriétés colorimétriques dépendent du spectre et de la direction de la lumière incidente. Ces propriétés colorimétriques sont la couleur visible, la luminosité de la face vernissée, sa texture ou son moiré apparent, ainsi que tout autre effet optique visible. Selon l'invention, en fonction de la nature des matériaux, le même vernis peut modifier de façon différente les propriétés colorimétriques des deux zones 6 et 8. Ces deux zones 6 et 8, à l'état brut, pourraient même apparaître de même couleur avec un éclairage en lumière blanche par exemple. Selon l'invention, la coque bi-injectée possède des premières et deuxièmes propriétés colorimétriques brutes, avant application du vernis. Le vernis possède lui-même des troisièmes propriétés colorimétriques. La coque vernissée possède au final des quatrièmes et cinquièmes propriétés colorimétriques. Les quatrièmes et cinquièmes propriétés colorimétriques sont différentes l'une de l'autre, et sont aussi différentes des propriétés colorimétriques des premières et deuxièmes propriétés colorimétriques respectivement.

On obtient ainsi un boîtier avec une finition en surface haut de gamme, avec une continuité de l'état de surface et de la brillance pour toute la surface extérieure 3, et avec une diversité de couleurs représentant un motif dont les contours sont parfaitement délimités, sans gorges.

Dans le cas où le corps 1 est un boîtier de téléphone mobile, il comporte des ouvertures 11, Figure 2, pour laisser dépasser des touches permettant d'accéder à un dispositif électronique de commande protégé par ce boîtier. A l'endroit de ces ouvertures 11, on peut observer la superposition des couches de matériaux surmoulés les uns sur les autres

Dans une variante, un seul des matériaux de moulage est un matériau susceptible de recevoir par électrodéposition, par électrolyse, une couche métallique. Ainsi, en choisissant un tel matériau, on dépose ensuite une couche métallique sélectivement sur l'une des zones de la surface brute. Par exemple, on y dépose une couche de chrome. En particulier, la zone concernée est la zone 8 en regard des touches et du dispositif électronique pour lequel elle forme un plan de masse isolant de radiations néfastes. Ensuite, on applique sur toute la surface extérieure 3, y compris la zone métallisée, la couche de vernis. A l'endroit de la zone métallisée, avec un vernis blanc opale ou bleu, on obtient un rendu anodisé de la surface 3. Dans cet exemple, le matériau non métallisable est un polycarbonate. Le matériau métallisable est un ABS sur lequel la métallisation accroche par des radicaux butadiènes de l'ABS

Dans une autre variante, on peut assembler deux corps tels que 1 ensemble, après qu'ils aient été moulés indépendamment l'un de l'autre, et les recouvrir d'une couche de vernis après leur assemblage.

## Revendications

1. Coque (1) d'objet comportant une paroi monobloc obtenue par une bi-injection d'un premier (7) et d'un deuxième (9) matériau plastique dans un moule, dans cette paroi une première zone (6) apparente est formée par le premier matériau plastique et une deuxième zone (8) apparente est formée par le deuxième matériau plastique, **caractérisée en ce que** la paroi est recouverte à l'endroit de ces deux zones d'une couche continue d'un même vernis (10) translucide colorée, le vernis coloré comportant des pigments donnant aux deux zones de la paroi des propriétés colorimétriques finales différentes l'une de l'autre et différentes de propriétés colorimétriques brutes des matériaux plastiques moulés.

2. Coque selon la revendication 1, **caractérisée en ce qu'**une propriété colorimétrique finale d'une zone est une couleur nacrée.

3. Coque selon l'une des revendications 1 à 2, **caractérisée en ce qu'**un des matériaux est électrolysable, c'est-à-dire accueille un traitement électrolytique, et pas l'autre, **en ce que** la zone apparente en ce matériau électrolysable est métallisée, et **en ce que** le vernis est coloré pour donner un aspect anodisé à la zone apparente électrolysable.

4. Coque selon la revendication 3, **caractérisée en ce que** la métallisation est une métallisation en chrome.

5. Coque selon l'une des revendications 3 à 4, **caractérisée en ce que** le matériau plastique électrolysable est de l'ABS, l'autre matériau plastique étant du polycarbonate.

6. Procédé de fabrication d'une coque (1) d'un objet comportant les étapes suivantes
- on injecte d'un premier (7) et d'un deuxième (9) matériau plastique dans un moule pour former une paroi monobloc de cette coque,
- dans cette paroi une première zone apparente (6) est formée par le premier matériau plastique et une deuxième zone apparente (8) est formée par le deuxième matériau plastique,
**caractérisé en ce qu'**il comporte les étapes suivantes
- la paroi est recouverte à l'endroit de ces deux zones d'une couche continue d'un même vernis (10) translucide coloré, le vernis coloré comportant des pigments donnant aux deux zones de la paroi des propriétés colorimétriques finales différentes l'une de l'autre et différentes de propriétés colorimétriques brutes des matériaux plastiques moulés.

7. Procédé selon la revendication 6 **caractérisé en ce que**
- on dépose une couche métallique sur la première zone apparente avant de la recouvrir du vernis.

## Patentansprüche

1. Schale (1) eines Objekts, die eine einteilige Wand aufweist, erzielt durch einen Doppelspritzguss eines ersten (7) und eines zweiten (9) Kunststoffs in eine Form, wobei in dieser Wand eine erste sichtbare Zone (6) von dem ersten Kunststoff und eine zweite sichtbare Zone (8) von dem zweiten Kunststoff ausgebildet ist, **dadurch gekennzeichnet, dass** die Wand an der Vorderseite dieser zwei Zonen mit einer ununterbrochenen Schicht eines gleichen durchsichtigen gefärbten Lacks (10) überzogen ist, wobei der gefärbte Lack Pigmente aufweist, die den zwei Zonen der Wand endgültige kolorimetrische Eigenschaften verleihen, die voneinander und von den unbehandelten kolorimetrischen Eigenschaften der geformten Kunststoffe unterschiedlich sind.

2. Schale nach Anspruch 1, **dadurch gekennzeichnet, dass** eine endgültige kolorimetrische Eigenschaft einer Zone eine Perlmuttfarbe ist.

3. Schale nach einem der Ansprüche 1 bis 2, **dadurch gekennzeichnet, dass** einer der Werkstoffe elekrolysierbar ist, das heißt, dass er eine elektrolytische Behandlung erhält und der andere nicht, **dadurch**, **dass** die sichtbare Zone aus diesem elektrolysierbaren Werkstoff metallisiert ist, und **dadurch**, **dass** der Lack gefärbt ist, um dieser elektrolysierbaren sichtbaren Zone ein eloxiertes Aussehen zu verleihen.

4. Schale nach Anspruch 3, **dadurch gekennzeichnet, dass** die Metallisierung eine Chrommetallisierung ist.

5. Schale nach einem der Ansprüche 3 bis 4, **dadurch gekennzeichnet, dass** der elektrolysierbare Kunststoff ABS ist, wobei der andere Kunststoff Polycarbonat ist.

6. Verfahren zum Herstellen einer Schale (1) eines Objekts, das die folgenden Schritte aufweist:
- Einspritzen eines ersten (7) und eines zweiten (9) Werkstoffs in eine Form, um eine einteilige Wand dieser Schale zu bilden,
- Ausbilden in dieser Wand einer ersten sichtbaren Zone (6) durch den ersten Kunststoff und einer zweiten sichtbaren Zone (8) durch den zweiten Kunststoff,
**dadurch gekennzeichnet, dass** es die folgenden Schritte aufweist:
- Bedecken der Wand an der Vorderseite dieser zwei Zonen mit einer ununterbrochenen Schicht eines gleichen gefärbten durchsichtigen Lacks (10), wobei der gefärbte Lack Pigmente enthält, die den zwei Zonen der Wand voneinander unterschiedliche endgültige kolorimetrische Eigenschaften und von den unbehandelten kolorimetrischen Eigenschaften der geformten Kunststoffe unterschiedliche endgültige kolorimetrische Eigenschaften verleihen.

7. Verfahren nach Anspruch 6, **dadurch gekennzeichnet, dass**
- man eine Metallschicht auf die erste sichtbare Zone aufbringt, bevor man sie mit Lack abdeckt.

## Claims

1. A shell (1) of an object comprising a one-piece wall obtained by bi-injection of a first (7) and second (9) plastic material in a mold, in this wall a first visible area (6) is formed by the first plastic material and a second visible area (8) is formed by the second plastic material, **characterized in that** the wall is covered at the location of these two areas with a continuous layer of the same translucent colored varnish (10), the colored varnish comprising pigments giving final colorimetric properties to the two areas of the wall that are different from each other and different from the crude colorimetric properties of the molded plastic materials.

2. The shell according to claim 1, **characterized in that** a final colorimetric property of an area is a mother of pearl color.

3. The shell according to one of claims 1 to 2, **characterized in that** one of the materials is electrolysable, that is, the material maintains an electrolytic treatment, and not the other, **in that** the visible area in this electrolysable material is metalized, and **in that** the varnish is colored to give an anodized appearance to the visible electrolysable area.

4. The shell according to claim 3, **characterized in that** the metallization is chromium metallization.

5. The shell according to one of claims 3 to 4, **characterized in that** the electrolysable plastic material is ABS, the other plastic material being polycarbonate.

6. The manufacturing process of a shell (1) of an object comprising the following steps
- a first (7) and second (9) plastic material is injected in a mold to form a one-piece wall of this shell,
- in this wall a first visible area (6) is formed by the first plastic material and a second visible area (8) is formed by the second plastic material,
**characterized in that** the process comprises the following steps
- the wall is covered at the location of these two areas with a continuous layer of the same translucent colored varnish (10), the colored varnish comprising pigments giving final colorimetric properties to the two areas of the wall that are different from each other and different from the crude colorimetric properties of the molded plastic materials.

7. The process according to claim 6 **characterized in that**
- a metallic layer is deposited on the first visible area before the varnish covering.
